# EUROPÄISCHE PATENTSCHRIFT

(11) **EP 2 583 005 B1**
(45) Veröffentlichungstag und Bekanntmachung des Hinweises auf die Patenterteilung: **28.12.2016**
(21) Anmeldenummer: 11719484.5
(22) Anmeldetag: 10.05.2011
(51) Int. Cl.: F16H 61/00

(54) **FAHRZEUG MIT AUTOMATIKGETRIEBE UND EINER MOTORSTART-/STOPPAUTOMATIK**
VEHICLE HAVING AN AUTOMATIC TRANSMISSION AND AN AUTOMATIC ENGINE START/STOP FACILITY
VÉHICULE À BOÎTE DE VITESSES AUTOMATIQUE PRÉSENTANT UN SYSTÈME AUTOMATIQUE DE DÉMARRAGE/ARRÊT DU MOTEUR

(30) Priorität: 17.06.2010 DE 102010030225
(43) Veröffentlichungstag der Anmeldung: 24.04.2013
(73) Patentinhaber: Bayerische Motoren Werke Aktiengesellschaft, 80809 München (DE)
(72) Erfinder: NEUNER, Josef, 83064 Raubling (DE)
(86) Internationale Anmeldenummer: PCT/EP2011/002319
(87) Internationale Veröffentlichungsnummer: WO 2011/157329

(56) Entgegenhaltungen:
- EP-A2- 1 898 101
- DE-A1- 10 128 867
- DE-A1-102006 014 758
- DE-A1-102007 024 751
- DE-A1-102009 047 828
- US-A1- 2007 243 074
- US-A1- 2009 143 193

## Beschreibung

Die vorliegende Erfindung betrifft ein Fahrzeug mit einem Automatikgetriebe und einer Motorstart-/Stoppautomatik gemäß dem Oberbegriff des Patentanspruches 1.

Ein derartiges Fahrzeug ist aus der US 2009/014193 A1, A1 bekannt. Zum relevanten Stand der Technik zählen ferner die, die DE 101 28 867 A1, DE 2006 014 758 A1, EP 1 898 010 A2, DE 10 2009 047 828 A1 sowie die DE 10 2007 024 751 A1.

Moderne Fahrzeuge mit Verbrennungsmotor werden in zunehmendem Umfang mit einer sogenannten Motorstart-/stoppautomatik ausgerüstet. Hierbei handelt es sich um eine komplexe elektronische Steuerung bzw. Regelung, die bei "Fahrunterbrechungen", wie z. B. beim kurzzeitigen Anhalten im Stopp-and-Go-Verkehr, den Verbrennungsmotor abschaltet und ihn automatisch wieder startet, wenn der Fahrer ein "Wiederanfahrsignal" gibt. Derartige Motorstart-/stoppsysteme wurden zunächst bei Fahrzeugen mit manuellem Schaltgetriebe eingeführt. Bei Fahrzeugen mit Handschaltgetrieben wird der Motor bei stehendem Fahrzeug ausgeschaltet, sobald das Getriebe in den Leerlaufzustand geschaltet wird und bestimmte Randbedingungen (z. B. Motoröltemperatur, Außentemperatur, etc.) erfüllt sind. Durch Treten der Kupplung wird der Verbrennungsmotor automatisch wieder gestartet.

Fahrzeuge mit Automatikgetriebe weisen diverse Getriebeschaltelemente (Kupplungen, Bremsen etc.) auf, die von einer Elektrohydraulik angesteuert werden. Voraussetzung für eine Ansteuerung ist, dass ein hinreichend hoher Öldruck vorliegt. Beim Starten eines Fahrzeugs mit Automatikgetriebe und mechanisch vom Verbrennungsmotor angetriebener Getriebeölpumpe kann es mitunter knapp eine Sekunde dauern, bis die Ölpumpe einen für Schaltvorgänge und somit zum Anfahren hinreichend hohen Öldruck aufgebaut hat. Bei Fahrzeugen mit Automatikgetriebe und einer Motorstart-/stoppautomatik sollte der zum Anfahren erforderliche Öldruck jedoch möglichst verzögerungsfrei nach dem Starten des Verbrennungsmotors erreicht werden, da im "Stopp-and-Go-Betrieb" regelmäßige Anfahrverzögerungen von mehreren Zehntel Sekunden vom Kunden nicht akzeptiert würden.

Aufgabe der Erfindung ist es, ein Fahrzeug mit Verbrennungsmotor, Automatikgetriebe und einer Motorstart-/stoppautomatik zu schaffen, das im Motorstart-/stoppbetrieb ein möglichst verzögerungsfreies Anfahren nach dem Starten des Verbrennungsmotors ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einem Verbrennungsmotor und einem Automatikgetriebe, das eine elektrohydraulische Getriebesteuerung aufweist. Schaltelemente des Getriebes, wie z. B. Kupplungen oder Bremsen, werden hydraulisch von der elektrohydraulischen Getriebesteuerung angesteuert. Der hierfür erforderliche Hydraulikdruck wird von einer von dem Verbrennungsmotor mechanisch angetriebenen Ölpumpe geliefert. Die Getriebeölpumpe kann direkt oder indirekt mechanisch von dem Verbrennungsmotor angetrieben sein. Sie kann z. B. auf einer Getriebeeingangswelle des Automatikgetriebes angeordnet sein. Bei der Getriebeölpumpe kann es sich z. B. um eine Zahnradpumpe oder um eine Flügelzellenpumpe handeln. Im laufenden Betrieb des Verbrennungsmotors pumpt die Getriebeölpumpe Öl über eine Hauptleitung zu der elektrohydraulischen Getriebesteuerung.

Das Fahrzeug weist ferner eine Motorstart-/stoppelektronik auf, welche in Betriebsphasen, in denen das Fahrzeug vorübergehend angehalten wird, wie z. B. im "Stopp-and-Go-Betrieb", an einer rote Ampel, etc., bei Vorliegen vorgegebener Betriebsparameter den Verbrennungsmotor "automatisch" abschaltet und bei Vorliegen eines vom Fahrer vorgegebenen "Wiederanfahrsignals" automatisch startet.

Der Kern der Erfindung besteht in einer Ölspeichereinrichtung, die in einer Zeitspanne nach dem Starten des Verbrennungsmotors, in der die Getriebeölpumpe gerade erst Druck aufbaut, durch den sich aufbauenden Öldruck der Getriebeölpumpe entleert wird, wobei das Öl aus der Ölspeichereinrichtung zur Versorgung der elektrohydraulischen Getriebesteuerung vorgesehen ist.

Mittels einer derartigen Ölspeichereinrichtung wird in konstruktiv einfacher und kostengünstiger Weise erreicht, dass zum Anfahren erforderliche Schaltvorgänge im Getriebe annähernd verzögerungsfrei unmittelbar nach dem Starten des Verbrennungsmotors durchgeführt werden können. Gegenüber herkömmlichen Fahrzeugen mit Automatikgetriebe kann also wesentlich schneller "Anfahrbereitschaft" hergestellt werden.

Nach der Erfindung weist die Ölspeichereinrichtung einen Zylinder mit einem verschieblich darin angeordneten Kolben, insbesondere einem Stufenkolben, auf. Der (Stufen-)Kolben unterteilt den Zylinder in einen ersten und einen zweiten Kolbenraum, wobei der Stufenkolben auf der dem ersten Kolbenraum zugewandten Seite eine wirksame Kolbenfläche aufweist, deren Größe sich von der Größe der dem zweiten Kolbenraum zugewandten wirksamen Kolbenfläche unterscheidet.

Der erste Kolbenraum steht in Fluidverbindung mit der Getriebesteuerung. Der dem ersten Kolbenraum abgewandte zweite Kolbenraum steht in Fluidverbindung mit einem Ausgang der Getriebeölpumpe. Die Stellung des Kolbens im Zylinder ist durch die an dem Stufenkolben angreifenden Fluidkräfte bestimmt, d.h. durch die in den beiden Kolbenräumen herrschenden Drücke und die Größen der beiden wirksamen Kolbenflächen des Stufenkolbens.

Nach der Erfindung ist zwischen der Ölspeichereinrichtung und dem Fluideingang des Getriebes bzw. der Getriebesteuerung eine Drosseleinrichtung vorgesehen, die bei einer vorgegebenen, an der Drosseleinrichtung anliegenden Druckdifferenz von der Ölspeichereinrichtung in Richtung zum Getriebe hin einen größeren Volumenstrom ermöglicht als bei einer betragsmäßig gleichen, in umgekehrter Richtung wirkenden Druckdifferenz.

Nach der Erfindung ist in der Hauptleitung, über die der Ausgang der Getriebeölpumpe mit der Getriebesteuerung verbunden ist, ein Rückschlagventil angeordnet. Das Rückschlagventil ermöglicht einen Ölfluss vom Ausgang der Getriebeölpumpe in Richtung zur Getriebesteuerung. In umgekehrter Richtung sperrt das Rückschlagventil.

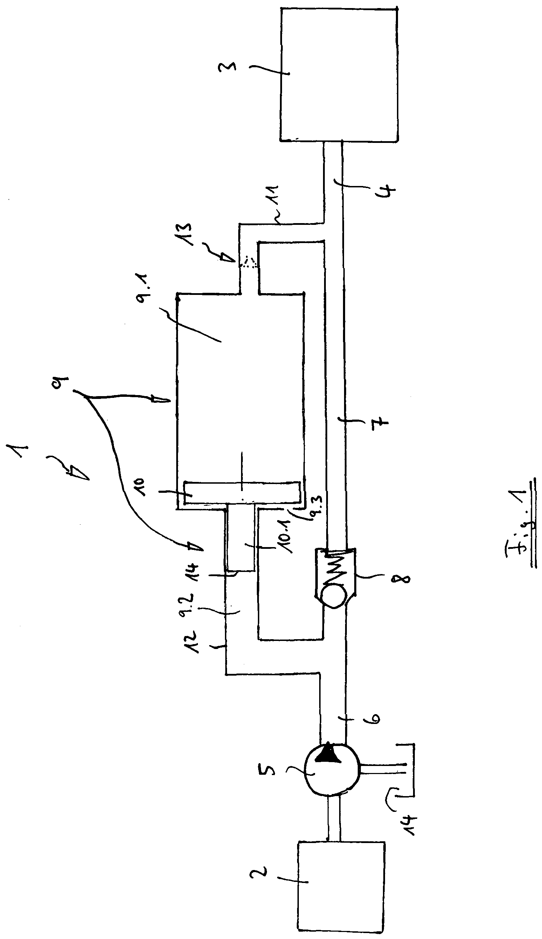

Im Folgenden wird die Erfindung im Zusammenhang mit der Zeichnung näher erläutert. Die einzige Figur 1 zeigt ein Ausführungsbeispiel gemäß der Erfindung.

Figur 1 zeigt eine Ölspeichereinrichtung 1 für ein Fahrzeug, das von einem Verbrennungsmotor 2 angetrieben wird und das ein Automatikgetriebe 3 und eine Motorstart-/stoppautomatik (nicht dargestellt) aufweist. Die Motorstart-/stoppautomatik ist dazu vorgesehen, in Betriebsphasen, in denen das Fahrzeug vorübergehend angehalten wird, bei Vorliegen vorgegebener Betriebsparameter den Verbrennungsmotor 2 automatisch abzuschalten und bei Vorliegen eines vom Fahrer vorgegebenen Wiederanfahrsignals automatisch wieder zu starten.

Das Automatikgetriebe 3 weist ein oder mehrere von einer elektrohydraulischen Getriebesteuerung angesteuerte Schaltelemente (z. B. Kupplungen, Bremsen etc.) auf. Für die Ansteuerung dieser Schaltelemente wird dem Automatikgetriebe Hydraulikdruck über einen Hydraulikeingang 4 zur Verfügung gestellt. Der Eingangsdruck wird im laufenden Betrieb des Verbrennungsmotors 2 von einer mechanisch von dem Verbrennungsmotor 2 angetriebenen Getriebeölpumpe 5 erzeugt. Ein Ausgang 6 der Getriebeölpumpe 5 ist über eine Hauptleitung 7 mit dem Hydraulikeingang 4 des Automatikgetriebes 3 verbunden. In der Hauptleitung 7 ist ein Rückschlagventil 8 angeordnet, das ein Strömen von Öl von der Getriebeölpumpe 5 in Richtung des Automatikgetriebes 3 ermöglicht und das in umgekehrter Richtung sperrt.

Die Ölspeichereinrichtung 1 ist parallel zu der Hauptleitung 7 angeordnet. Sie weist einen Zylinder 9 mit einem verschieblich darin angeordneten Stufenkolben auf. Der Stufenkolben weist einen großen Kolbenteil 10 und einen damit verbundenen bzw. sich unmittelbar daran anschließenden kleinen Kolbenteil 10.1 auf, der einen geringeren Durchmesser und dementsprechend eine kleinere wirksame Kolbenfläche als der große Kolbenteil 10 hat. Der Stufenkolben unterteilt den Zylinder 9 in einen ersten Kolbenraum 9.1 und einen zweiten Kolbenraum 9.2.

Wie aus Figur 1 ersichtlich ist, weist der Zylinder 9 auf der dem kleinen Kolbenteil 10.1 zugewandten Seite des Stufenkolbens eine Entlüftungsbohrung 10.2 auf.

Der Kolbenraum 9.1 des Zylinders 9 ist über eine Fluidleitung 11 mit dem Druckeingang 4 des Automatikgetriebes 3 verbunden. Der Kolbenraum 9.2 ist über eine Fluidleitung 12 mit dem Druckausgang 6 der Getriebeölpumpe 5 verbunden. In der Fluidleitung 11 ist eine sogenannte "Rückschlagblende" 13 angeordnet. Eine Rückschlagblende ist ganz allgemein eine Vorrichtung, die in beiden Strömungsrichtungen, d. h. vom Zylinder 9 in Richtung des Druckeingangs 4 als auch in umgekehrter Strömungsrichtung einen Volumenstrom zulässt. Bei einer betragsmäßig vorgegebenen Druckdifferenz an der Rückschlagblende 13 ermöglicht diese jedoch in Strömungsrichtung vom Zylinder 9 in Richtung des Druckeingangs 4 einen größeren Volumenstrom als in umgekehrter Strömungsrichtung.

Alternativ dazu könnte die Rückschlagblende 13 auch in der Fluidleitung 12 angeordnet sein.

Im Folgenden wird die Funktionsweise der in Figur 1 gezeigten Anordnung näher erläutert.

Im laufenden Betrieb des Verbrennungsmotors läuft die Getriebeölpumpe 5 mit normaler Betriebsdrehzahl. Die Getriebeölpumpe 5 fördert somit Öl aus einem Ölsumpf 14 und pumpt das Öl über die Hauptleitung 7 zum Druckeingang 4 des Automatikgetriebes 3. In den Fluidleitungen 11, 12 herrscht annähernd derselbe Druck, was dazu führt, dass der Kolben 10 in die in Figur 1 gezeigte linke Endstellung bewegt wird und dort verharrt. Der Kolbenraum 9.1 ist dabei vollständig mit Öl gefüllt.

Wird der Verbrennungsmotor, z. B. bei einem Ampelstopp, automatisch von der Motorstart-/stoppelektronik abgeschaltet, so bleibt auch die Getriebeölpumpe 5 stehen, was zu einem Druckabfall am Druckeingang 4, am Druckausgang 6 sowie in den Fluidleitungen 11, 12 führt. Der Kolbenraum 9.1 des Zylinders 9 bleibt dabei weitgehend bzw. vollständig mit Öl gefüllt.

Wird der Verbrennungsmotor 2 erneut gestartet, so braucht es einige Zehntel Sekunden, bis die Getriebeölpumpe 5 ihren vollen Betriebsdruck aufgebaut hat. Der sich allmählich aufbauende Betriebsdruck wird dabei zunächst durch das Rückschlagventil 8 gegenüber der Hauptleitung 7 abgesperrt und wirkt somit nur auf eine Stirnseite 14 des kleinen Kolbenteils 10.1. In den beiden Kolbenräumen 9.2 und 9.1 herrscht somit eine Druckdifferenz. Das am Stufenkolben bestehende Kräfteungleichgewicht führt dazu, dass der Kolben 10 nach rechts verschoben und das im Kolbenraum 9.1 befindliche Öl zum Druckeingang 4 des Automatikgetriebes 3 gedrückt wird und zwar unmittelbar nach dem Starten des Verbrennungsmotors 2, d. h. in einer Phase, in der die Getriebeölpumpe 5 noch nicht ihren vollen Betriebsdruck erreicht hat. Durch das nach rechts Verschieben des Kolbens 10 wird am Druckeingang 4 ein für ein Schalten des Automatikgetriebes 3 hinreichender Öldruck bereit gestellt.

Sobald die Getriebeölpumpe 5 ihren normalen Arbeitsdruck erreicht hat, wird der Kolben 10, durch den auf die dem Kolbenraum 9.1 zugewandte (größere) Kolbenfläche wieder in die in Figur 1 gezeigte Endstellung nach links verschoben.

## Patentansprüche

1. Fahrzeug mit
- einem Verbrennungsmotor (2),
- einem Automatikgetriebe (3), das eine elektrohydraulische Getriebesteuerung aufweist,
- einer direkt oder indirekt mechanisch von dem Verbrennungsmotor (2) angetriebenen Getriebeölpumpe (5), welche im laufenden Betrieb des Verbrennungsmotors (2) über eine Hauptleitung (7) Öl zu der elektrohydraulischen Getriebesteuerung pumpt und
- einer Ölspeichereinrichtung (9.1),
- einer Motorstart-/Stoppelektronik, welche in Betriebsphasen, in denen das Fahrzeug vorübergehend angehalten wird, bei Vorliegen vorgegebener Betriebsparameter den Verbrennungsmotor (2) abschaltet und bei Vorliegen eines Wiederanfahrsignals startet, wobei
- die Ölspeichereinrichtung (9.1) in einer Zeitspanne nach dem Starten des Verbrennungsmotors (2), in der die Getriebeölpumpe (5) gerade erst Druck aufbaut, entleert wird, wobei das Öl aus der Ölspeichereinrichtung (1) zur Versorgung der elektrohydraulischen Getriebesteuerung vorgesehen ist,
**dadurch gekennzeichnet, dass**
• die Ölspeichereinrichtung (9.1) in der Zeitspanne nach dem Starten des Verbrennungsmotors (2), in der die Getriebeölpumpe (5) gerade erst Druck aufbaut, durch den sich aufbauenden Druck der Getriebeölpumpe (5) entleert wird,
• die Ölspeichereinrichtung (1) einen Zylinder (9) mit einem verschieblich darin angeordneten Stufenkolben (10, 10.1) aufweist, der den Zylinder (9) in einen ersten Kolbenraum (9.1) unterteilt, der in Fluidverbindung mit der Getriebesteuerung steht und in einen zweiten Kolbenraum (9.2), der in Fluidverbindung mit einem Ausgang (6) der Getriebeölpumpe (5) steht,
• in der Hauptleitung (7) ein Rückschlagventil (8) angeordnet ist, das einen Volumenstrom vom Druckausgang (6) der Getriebeölpumpe (5) zur elektrohydraulischen Getriebesteuerung ermöglicht und das in umgekehrter Richtung sperrt und
• in
∘ einer Fluidleitung (12), über die der Druckausgang (6) der Getriebeölpumpe (5) mit dem zweiten Kolbenraum (9.2) verbunden ist, oder
∘ einer Fluidleitung (11), über die der erste Kolbenraum (9.1) mit einem Druckeingang (4) des Automatikgetriebes (3) verbunden ist,
eine Vorrichtung (13) angeordnet ist, die bei einer betragsmäßig vorgegebenen Druckdifferenz an der Vorrichtung (13) in Strömungsrichtung von dem Druckausgang (6) der Getriebeölpumpe (5) zum zweiten Kolbenraum (9.2) bzw. von dem ersten Kolbenraum (9.1) zu dem Druckeingang (4) des Automatikgetriebes (3) einen größeren Volumenstrom als in umgekehrter Richtung ermöglicht.

2. Fahrzeug nach Anspruch 1, **dadurch gekennzeichnet, dass** der Stufenkolberi (10, 10.1) auf der dem zweiten Kolbenraum (9.2) zugewandten Seite einen Kolbenteil (10.1) aufweist, der eine kleinere wirksame Kolbenfläche hat als ein dem ersten Kolbenraum (9.1) zugewandter Kolbenteil (10).

3. Fahrzeug nach einem der Ansprüche 1 oder 2, **dadurch gekennzeichnet, dass** zwischen der Ölspeichereinrichtung (1) und einem Eingang (4) der elektrohydraulischen Getriebesteuerung eine Drosseleinrichtung (13) vorgesehen ist, die bei einer vorgegeben, an der Drosseleinrichtung (13) anliegenden Druckdifferenz von der Ölspeichereinrichtung (1) in Richtung zu dem Eingang (4) hin einen größeren Volumenstrom zulässt als bei einer betragsmäßig gleich großen, in umgekehrter Richtung an der Drosseleinrichtung (13) anliegenden Druckdifferenz.

## Claims

1. A vehicle having
- an internal combustion engine (2),
- an automatic transmission (3) which has an electrohydraulic transmission control,
- a transmission oil pump (5) which is driven mechanically directly or indirectly by the internal combustion engine (2) and which, in running operation of the internal combustion engine (2), pumps oil to the electrohydraulic transmission control via a main line (7), and
- an oil storage device (9.1),
- an engine stop/start electronic system which, in operating phases in which the vehicle is temporarily stopped, disconnects the internal combustion engine (2) when predetermined operating parameters are present and starts it when a restart signal is present, wherein
- the oil storage device (9.1) is emptied during a period of time after the start of the internal combustion engine (2), in which period the transmission oil pump (5) is only just building up pressure, wherein the oil from the oil storage device (1) is provided to supply the electrohydraulic transmission control,
**characterised in that**
• the oil storage device (9.1) is emptied by the building-up pressure of the transmission oil pump (5) during the period of time after the start of the internal combustion engine (2), in which period the transmission oil pump (5) is only just building up pressure,
• the oil storage device (1) has a cylinder (9) with a stepped piston (10, 10.1) which is arranged displaceably therein and which divides the cylinder (9) into a first piston chamber (9.1) which is fluidically connected to the transmission control, and into a second piston chamber (9.2) which is fluidically connected to an outlet (6) of the transmission oil pump (5),
• arranged in the main line (7) is a check valve (8) which allows a volume flow from the pressure outlet (6) of the transmission oil pump (5) to the electrohydraulic transmission control, and which blocks it in the opposite direction, and
• arranged in
∘ a fluid line (12), by which the pressure outlet (6) of the transmission oil pump (5) is connected to the second piston chamber (9.2), or
∘ a fluid line (11), by which the first piston chamber (9.1) is connected to a pressure inlet (4) of the automatic transmission (3),
is a device (13) which allows a greater volume flow than in the opposite direction, when there is a predetermined pressure difference in terms of amount at the device (13) in the direction of flow from the pressure outlet (6) of the transmission oil pump (5) to the second piston chamber (9.2) or from the first piston chamber (9.1) to the pressure inlet (4) of the automatic transmission (3),

2. A vehicle according to claim 1, **characterised in that** the stepped piston (10, 10.1) has on the side facing the second piston chamber (9.2) a piston part (10.1) which has a smaller effective piston surface than a piston part (10) which faces the first piston chamber (9.1).

3. A vehicle according to either claim 1 or claim 2, **characterised in that** provided between the oil storage device (1) and an inlet (4) of the electrohydraulic transmission control is a throttle device (13) which, with a predetermined pressure difference which is present at the throttle device (13), allows a greater volume flow from the oil storage device (1) towards the inlet (4) compared to when there is an equal pressure difference in terms of amount at the throttle device (13) in the opposite direction.

## Revendications

1. Véhicule comprenant :
- un moteur à combustion interne (2),
- une boîte de vitesses automatique (3) comportant une commande de boîte de vitesses électro-hydraulique,
- une pompe à huile à engrenages (5) entraînée mécaniquement directement ou indirectement par le moteur à combustion interne (2), et qui, en cours de fonctionnement du moteur à combustion interne (2) refoule de l'huile vers la commande de boîte de vitesses électro-hydraulique par une conduite principale (7), et
- un dispositif accumulateur d'huile (9.1),
- un système de démarrage et d'arrêt électronique du moteur qui, dans des phases de fonctionnement dans lesquelles le véhicule est arrêté temporairement coupe le moteur à combustion interne (2) en présence de paramètres de fonctionnement prédéfini et le démarre en présence d'un signal de redémarrage,
- le dispositif accumulateur d'huile (9.1) étant vidé pendant un intervalle de temps après le démarrage du moteur à combustion interne (2) dans lequel la pompe à huile à engrenages (5) vient juste d'établir une pression, l'huile sortant du dispositif accumulateur d'huile (1) étant prévue pour alimenter la commande de boîte de vitesses électro-hydraulique,
**caractérisé en ce que**
• le dispositif accumulateur d'huile (9.1) est vidé, dans l'intervalle de temps suivant le démarrage du moteur à combustion interne (2) pendant lequel la pompe à huile à engrenages vient juste d'établir une pression, par la pression de la pompe à huile à engrenages (5) s'établissant,
• le dispositif accumulateur d'huile (1) comprend un cylindre (9) muni d'un piston à gradins (10, 10.1) monté coulissant dans celui-ci, qui subdivise ce cylindre (9) en une première chambre de piston (9.1) qui est en communication fluidique avec la commande de boîte de vitesses et en une seconde chambre de piston (9.2) qui est en communication fluidique avec la sortie (6) de la pompe à huile à engrenages (5),
• dans la conduite principale (7) est montée une soupape anti-retour (8) qui permet le passage d'un débit de la sortie de refoulement (6) de la pompe à huile à engrenages (5) vers la commande de boîte de vitesses électro-hydraulique et l'empêche dans le sens opposé, et
• dans
∘ une conduite de fluide (12), par laquelle la sortie de refoulement (6) de la pompe à huile de boîte de vitesses (5) est reliée à la seconde chambre de piston (9.2), ou
∘ une conduite de fluide (11) par laquelle la première chambre de piston (9.1) est reliée à une entrée de pression (4) de la boîte de vitesses automatique (3),
est installé un dispositif (13) qui permet en présence d'une différence de pression de valeur prédéfinie au niveau de ce dispositif (13) un débit plus important dans la direction de circulation de la sortie de refoulement (6) de la pompe à huile à engrenages (5) vers la seconde chambre de piston (9.2) ou de la première chambre de piston (9.1) vers l'entrée de pression (4) de la boîte de vitesses automatique (3) qu'en sens inverse.

2. Véhicule conforme à la revendication 1,
**caractérisé en ce que**
le piston à gradins (10, 10.1) comprend, du côté tourné vers la seconde chambre de piston (9.2) une partie de piston (10.1) qui a une surface de piston active inférieure à celle d'une partie de piston (10) tournée vers la première chambre de piston (9.1).

3. Véhicule conforme à l'une des revendications 1 et 2,
**caractérisé en ce qu'**
entre le dispositif accumulateur d'huile (1) et l'entrée (4) de la commande de boîte de vitesses électro-hydraulique il est prévu un dispositif d'étranglement (13) qui, en présence d'une différence de pression prédéfinie établie au niveau de ce dispositif d'étranglement (13) du dispositif accumulateur d'huile (1) en direction de l'entrée (4) autorise un débit plus important qu'en présence d'une différence de pression de même valeur établie en sens inverse au niveau du dispositif d'étranglement (13).
